# EUROPEAN PATENT APPLICATION

(11) **EP 3 951 612 A1**
(43) Date of publication of application: **09.02.2022**
(21) Application number: 20929671.4
(22) Date of filing: 24.12.2020
(51) Int. Cl.: G06F 16/27, G06F 16/22, H04L 12/733

(54) **DISTRIBUTED DATA STORAGE METHOD, DEVICE, AND STORAGE MEDIUM**

(30) Priority: 08.06.2020 CN 202010511010
(71) Applicant: Jiangsu Fuzamei Technology Co. Ltd., Suzhou, Jiangsu 215000 (CN)
(72) Inventor: YUAN, Xingqiang, Suzhou Jiangsu 215000 (CN); WANG, Zhiwen, Suzhou Jiangsu 215000 (CN); WU, Sijin, Suzhou Jiangsu 215000 (CN)
(74) Representative: Miao, Tianhao
(86) International application number: PCT/CN2020/138887
(87) International publication number: WO 2021/248876

(57) **Abstract**

The present invention provides a distributed data storage method and device, and a storage medium. The method comprises: generating first data according to a first number of to-be-stored continuous blocks; calculating a first distance between a node ID of a current node and the first data, and respectively calculating a second distance between the node ID of each node in a contained routing table and the first data; judging whether any second distance is less than the first distance: if no, generating first archived data according to the first number of to-be-stored continuous blocks and storing the first archived data; generating a first data set according to the first data and the first archived data; and selecting a second number of nodes from the contained routing table according to a pre-configured node selection method and transmitting the first data set for each selected node for storing the first archived data according to the first data set. The present application guarantees that block data of distributed storage may not be lost.

## Description

### Technical Field

The present application relates to the technical field of distributed storage and blockchains, and particularly to a distributed data storage method and device, and a storage medium.

### Background

In the prior art, it is assumed that each node has block (1)-block(10999) and a rollback depth of 10000. When a current node generates block(11000), block(11000) is broadcast for other blockchain nodes; and specific broadcast and consensus mechanisms are not repeated herein. When block(11000) is executed successfully, block (1)-block(1000) are considered not to be changed. The current node calculates first data chunkhash according to block(1)-block(1000), and a calculation method of a distance between the node and the chunkhash is: xor (node id, chunkhash); the current node finds D1 as a global nearest node through iterative query (i.e., xor (node id(D1), chunkhash) is smallest); the current node transmits a data set {chunkhash, chunk} for D1; chunk is the archived data (the archived data may be block(1)-block(1000) of block(1)-block(1000), may be configured as symmetrical encrypted data of block(1)-block(1000) and compressed data of block(1)-block(1000) to reduce the data of block(1)-block(1000), and may be configured as a block height interval [1,1000]); when D1 receives the data set, chunk is stored on a local P2P module (when the archived data is the block height interval [1,1000], D1 generates the chunk according to [1,1000] and stores the generated chunk on the local P2P module); and the blockchain modules of all nodes in the blockchain may delete block (1)-block(1000) after a period of time.

In the above mechanism, it takes a long time for the current node to find the D1. If the current node breaks down during this period, D1 may not receive chunkhash and D1 may not additionally pack a piece of block(1)-block(1000) on the P2P module. The blockchain modules of all the nodes in the blockchain may delete block (1)-block(1000) after a period of time, and there is no place in the entire blockchain network to query the block data of block(1)-block(1000).

### Summary

In view of the above defects or disadvantages in the prior art, the present invention aims to provide a distributed data storage method and device, and a storage medium, which can guarantee that block data may not be lost.

In a first aspect, the present invention provides a distributed data storage method applicable to blockchain nodes. The above method comprises:
generating first data according to a first number of to-be-stored continuous blocks;
calculating a first distance between a node ID of a current node and the first data, and respectively calculating a second distance between the node ID of each node in a contained routing table and the first data;
judging whether any second distance is less than the first distance:
   if no, generating first archived data according to the first number of to-be-stored continuous blocks and storing the first archived data; and
   generating a first data set according to the first data and the first archived data; and
   selecting a second number of nodes from the contained routing table according to a pre-configured node selection method and transmitting the first data set for each selected node for storing the first archived data according to the first data set.

In a second aspect, the present invention provides a distributed data storage method applicable to blockchain nodes. The above method comprises:
receiving a first data set transmitted by a first blockchain node,
storing the first archived data according to the first data set.

In a third aspect, the present invention also provides a device which comprises one or more processors and a memory, wherein the memory comprises instructions that can be executed by the one or more processors so that the one or more processors execute the distributed data storage method provided according to the embodiments of the present invention.

In a fourth aspect, the present invention also provides a storage medium which stores computer programs. The computer programs enable a computer to execute the distributed data storage method provided according to the embodiments of the present invention.

Many embodiments of the present invention provide the distributed data storage method and device, and the storage medium. The method comprises: generating first data according to a first number of to-be-stored continuous blocks; calculating a first distance between a node ID of a current node and the first data, and respectively calculating a second distance between the node ID of each node in a contained routing table and the first data; judging whether any second distance is less than the first distance: if no, generating first archived data according to the first number of to-be-stored continuous blocks and storing the first archived data; generating a first data set according to the first data and the first archived data; selecting a second number of nodes from the contained routing table according to a pre-configured node selection method and transmitting the first data set for each selected node for storing the first archived data according to the first data set, to guarantee the distributed storage of the block data.

### Description of Drawings

By reading and referring to the detailed description of the non-limiting embodiments in the following drawings, other features, purposes and advantages of the present application will become more apparent.
Fig. 1 is a flow chart of a distributed data storage method provided in an embodiment of the present invention.
Fig. 2 is a flow chart of a preferred embodiment of the method shown in Fig. 1.
Fig. 3 is a flow chart of another distributed data storage method provided in an embodiment of the present invention.
Fig. 4 is a structural schematic diagram of a device provided in an embodiment of the present invention.

### Detailed Description

The present application will be further described in detail below in combination with the drawings and the embodiments. It should be understood that the specific embodiments described herein are only used for explaining the relevant invention, not used for limiting the invention. In addition, it should be noted that for ease of description, the drawings only show portions related to the present invention.

It should be explained that if there is no conflict, the embodiments in the present application and the features in the embodiments can be mutually combined. The present application will be described in detail below by reference to the drawings and in conjunction with the embodiments.

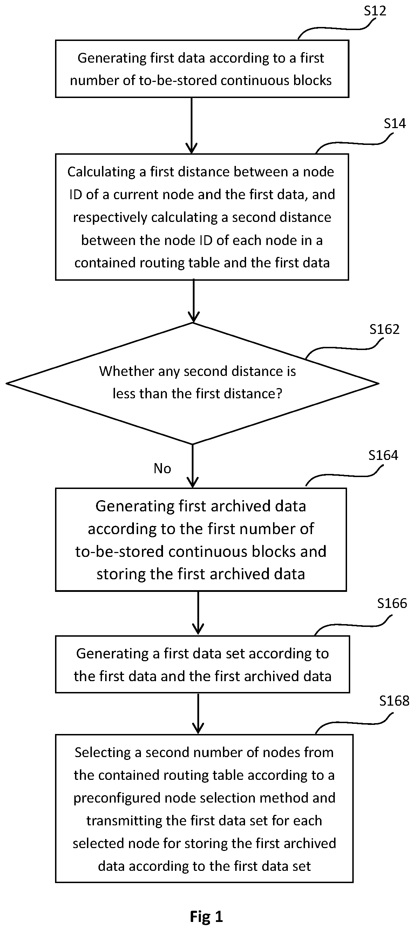

Fig. 1 is a flow chart of a distributed data storage method provided in an embodiment of the present invention. As shown in Fig. 1, in the present embodiment, the present invention provides a distributed data storage method applicable to blockchain nodes. The above method comprises:
S12: generating first data according to a first number of to-be-stored continuous blocks;
S14: calculating a first distance between a node ID of a current node and the first data, and respectively calculating a second distance between the node ID of each node in a contained routing table and the first data;
S162: judging whether any second distance is less than the first distance:
   if no, executing step S164: generating first archived data according to the first number of to-be-stored continuous blocks and storing the first archived data; and
S166: generating a first data set according to the first data and the first archived data; and
S168: selecting a second number of nodes from the contained routing table according to a pre-configured node selection method and transmitting the first data set for each selected node for storing the first archived data according to the first data set.

Specifically, with the following examples that "selecting a second n umber of nodes from the contained routing table according to the pre-c onfigured node selection method" is configured as "selecting a second n umber of nodes from the contained routing table according to the secon d distances in an ascending order", "generating first data according to a first number of to-be-stored continuous blocks" is configured as "gener ating the first data according to blockhash of the first number of to-be-stored continuous blocks", the first number is 1000, the second number is 10, the first data set comprises the first data and the first number of to-be-stored continuous blocks,and the generated archived data are th e first number of continuous blocks, it is assumed that the first number of to-be-stored continuous blocks are block(1)-block(1000)and nodes N0, M0, P0 and Q0 are nodes with the first distance not less than any se cond distance.

It is assumed that the current node is the node N0:
N0 executes step S12 of generating first data chunkhash according to blockhash(1)-blockhash(1000);
N0 executes step S14 of calculating a first distance between a node ID of the current node and the first data, and respectively calculating a second distance between the node ID of each node in a contained routing table and the first data;
N0 executes step S162 of judging whether any second distance is less than the first distance:
   Because the first distance is not less than any second distance, N0 executes step S164 of generating archived data chunk according to the to-be-stored block(1)-block(1000) and storing the chunk on a local P2P module; and
   N0 executes step S166 of generating a first data set {chunkhash, chunk} according to chunkhash; and
   N0 executes step S168 of selecting 10 nodes (assumed as N1-N10) from the contained routing table according to the second distances in an ascending order, and transmitting {chunkhash,chunk)} for N1-N10.

N1-N10 stores the chunk on the local P2P module according to {c hunkhash, chunk}.

Similarly, M0, P0 and Q0 execute steps S12-S168. It is assumed t hat 10 nodes selected by M0 are M1-M10; 10 nodes selected by P0 ar e P1-P10; and 10 nodes selected by Q0 are Q1-Q10. In the blockchain network, the nodes of chunk, i.e., N0-N10, M0-M10, P0-P10 and Q0-Q10, are stored in the local P2P module.

After a period of time (assumed as 12h), all the nodes in the bloc kchain network delete block(1)-block(1000) in the blockchain module, i. e., in the final blockchain network, block(1)-block(1000) are stored only in the local P2P modules of N0-N10, M0-M10, P0-P10 and Q0-Q10.

A client of a user or other blockchain nodes can obtain the chunk from N0-N10, M0-M10, P0-P10 and Q0-Q10. After the chunk is obtained, block(1)-block(1000) are restored on the local blockchain module to obtain the block data of block(1)-block(1000).

In more embodiments, "selecting a second number of nodes from the contained routing table according to the pre-configured node selection method" can also be configured according to actual needs, e.g., configured as selecting a second number of nodes from the contained routing table according to physical distances in an ascending order. The same technical effect can be realized.

In more embodiments, "generating first data according to a first number of to-be-stored continuous blocks" can also be configured according to actual demands, e.g., configured as generating the first data according to blockhash of the first number of to-be-stored continuous blocks. The same technical effect can be realized.

In more embodiments, the first number and the second number can be configured according to actual demands, which can realize the same technical effect.

In more embodiments, the first archived data can also be configured according to the actual demands, e.g., configured as: the compressed data of block(1)-block(1000), which can realize the same technical effect.

The block data may not be lost in the above embodiments.

Preferably, the step of selecting a second number of nodes from the contained routing table according to the pre-configured node selection method comprises:
selecting a second number of nodes from the contained routing table according to the second distances in an ascending order.

The distributed data storage principle of the above embodiments can be found in the method shown in Fig. 1, and will not be repeated herein.

Preferably, the step of generating first data according to a first number of to-be-stored continuous blocks comprises:
generating the first data according to blockhash of the first number of to-be-stored continuous blocks.

The distributed data storage principle of the above embodiments can be found in the method shown in Fig. 1, and will not be repeated herein.

Preferably, the first number of to-be-stored continuous blocks are determined by the current block height and block rollback depth.

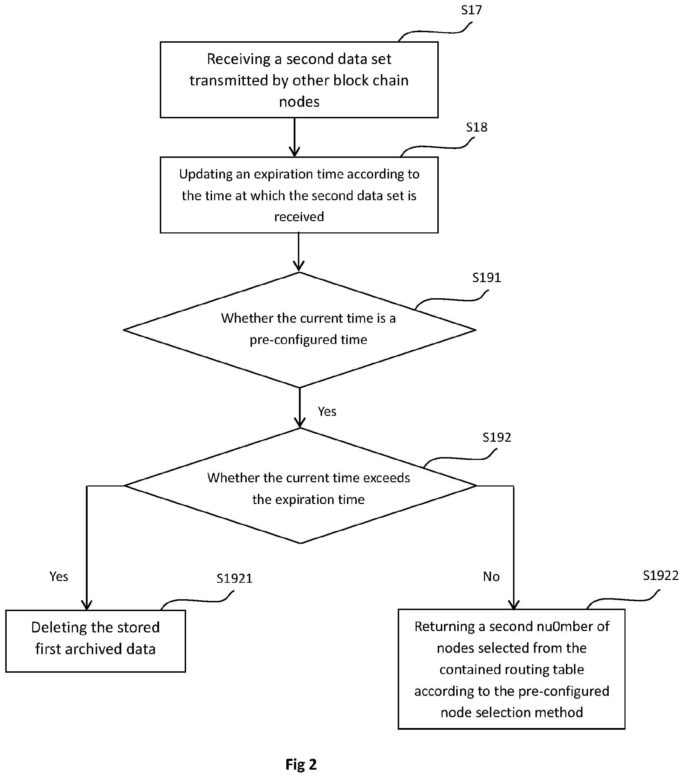

Fig. 2 is a flow chart of a preferred embodiment of the method shown in Fig. 1. As shown in Fig. 2, in a preferred embodiment, a blockchain network is a kad network; the stored first archived data is configured with an expiration time; the method also comprises:
S17: receiving a second data set transmitted by other blockchain nodes, wherein the second data set is generated by other blockchain nodes according to the second data and the first archived data, and the second data is generated by other blockchain nodes according to the stored first archived data;
S18: updating the expiration time according to the time at which the second data set is received;
S191: judging whether the current time is a pre-configured time:
   if so, executing step S192: checking whether the current time exceeds the expiration time:
   if so, executing step S1921: deleting the stored first archived data;
   if no, executing step S1922: returning a second number of nodes selected from the contained routing table according to the pre-configured node selection method.

Dynamic balancing strategies are configured in the existing kad network, specifically: a global optimal node (assumed as N0 in the embodiment shown in Fig. 1) transmits the first data set {chunkhash, chunk} for N1-N10, and N1-N10 stores the chunk on the local P2P module. By taking the current node of N1 as an example, it is assumed that N1 receives {chunkhash, chunk} at 2:00:00 on May 1, 2020. N1 updates the expiration time of chunk as 2:00:00 on May 2, 2020. It is assumed that the pre-configured time is every 10 hours after receiving {chunkhash, chunk}. At 2:00:00 on May 1 to 07:59:59 on May 2, N1 does not receive {chunkhash, chunk} broadcast by other blockchain nodes. At 08:00:00 on May 2, N1 detects that the current time exceeds the updated expiration time so that the stored chunk is deleted. It is assumed that N1 receives {chunkhash, chunk} at 4:00:00 on May 2, and N1 updates the expiration time as 4:00:00 on May 3. Due to the K bucket mechanism in the kad network, N0-N10 are most likely in the routing table contained in each other. N1 transmits {chunkhash, chunk} for N0 and N2-N10 to update the expiration time of the stored chunk.

Due to the possibility of breakdown of the nodes, all of N0-N10 break down in extreme cases, and blockhash(1)-blockhash(1000) will also be lost in the blockchain network. The dynamic balancing strategies are configured as follows: it is assumed that N1 suddenly breaks down and N0 selects 10 nodes with the minimum second distance from the contained routing table to transmit the nodes for the first data set so that 11 nodes in the blockchain network must contain chunk to restore blockhash(1)-blockhash(1000).

The blockchain network in the present application is a kad network and configured with the same dynamic balancing strategies with steps S17-S1922 which will not be repeated herein.

The above embodiments reduce the number of backups of distributed data in the blockchain network.

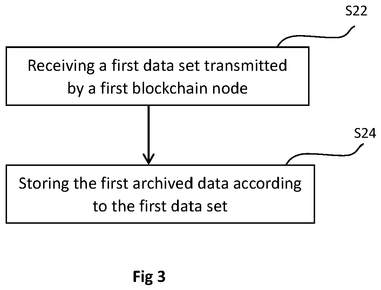

Fig. 3 is a flow chart of another distributed data storage method provided in an embodiment of the present invention. As shown in Fig. 3, in the present embodiment, the present invention provides a distributed data storage method applicable to blockchain nodes. The above method comprises:
S22: receiving a first data set transmitted by a first blockchain node,wherein the first data set comprises first data and first archived data; the first data is generated by the first blockchain node according to a first number of to-be-stored continuous blocks; the first data set is generated by the first blockchain node when judging that the first distance is not less than any second distance; the first distance is calculated according to the node id of the first blockchain node and the first data; each of the second distances is calculated according to the node ID of each node of the routing table contained in the first blockchain node and the first data; the first archived data is generated by the first blockchain node according to the first number of to-be-stored continuous blocks; the first blockchain node is also used for transmitting the first data set to a second number of nodes selected from the contained routing table according to the pre-configured node selection method;
storing the first archived data according to the first data set.

The distributed data storage principle of the above embodiments can be found in the method shown in Fig. 1, and will not be repeated herein.

Preferably, the step of transmitting the first data set to a second number of nodes selected from the contained routing table according to the pre-configured node selection method comprises:
transmitting the first data set to a second number of nodes selected from the contained routing table according to the second distances in an ascending order.

The distributed data storage principle of the above embodiments can be found in the method shown in Fig. 1, and will not be repeated herein.

Preferably, the first data is generated by the first blockchain node according to the blockhash of the first number of to-be-stored continuous blocks.

The distributed data storage principle of the above embodiments can be found in the method shown in Fig. 1, and will not be repeated herein.

Preferably, the first number of to-be-stored continuous blocks are determined by the current block height and block rollback depth.

Preferably, the blockchain network is a kad network; the first number of to-be-stored continuous blocks is configured with a corresponding expiration time; the method also comprises:
The blockchain network is a kad network; the stored first archived data is configured with an expiration time; the method also comprises:
receiving a second data set transmitted by the first data set or other blockchain nodes,wherein the second data set is generated by other blockchain nodes according to the second data and second archived data, and the second data and the second data set are generated by other blockchain nodes according to the stored first archived data;
updating the expiration time according to the time at which the first data set or the second data set is received;
judging whether the current time is a pre-configured time:
   if so, checking whether the current time exceeds the expiration time:
   if so, deleting the stored first archived data;
   if no, generating third data according to the stored first archived data, and generating a third data set according to the third data and the first archived data; and
   selecting a second number of nodes from the contained routing table according to the pre-configured node selection method; and
   transmitting the third data set for each selected node.

The distributed data storage principle of the above embodiments can be found in the method shown in Fig. 2, and will not be repeated herein.

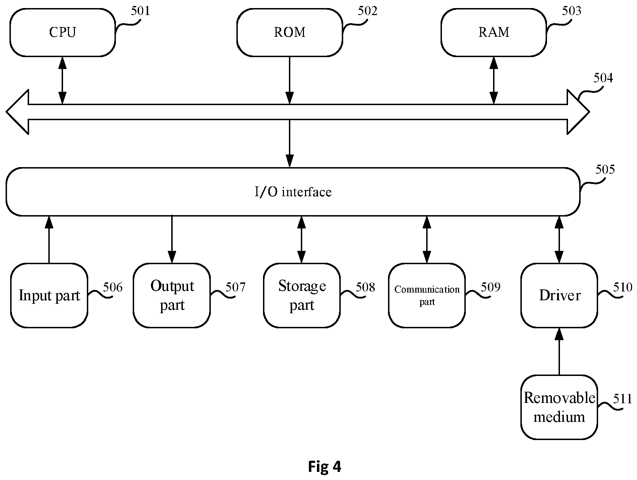

Fig. 4 is a structural schematic diagram of a device provided in an embodiment of the present invention.

As shown in Fig. 4, in another aspect, the present application also provides a device 500 which comprises one or more central processing units (CPU) 501 which can execute various appropriate actions and processing according to programs stored in a read-only memory (ROM) 502 or programs loaded into a random access memory (RAM) 503 from a storage part 508. Various programs and data required for operation of the device 500 are also stored in the RAM 503. The CPU 501, the ROM 502 and the RAM 503 are mutually connected through a bus 504. An input/output (I/O) interface 505 is also connected to the bus 504.

The following components are connected to the I/O interface 505: an input part 506 comprising a keyboard and a mouse; an output part 507 comprising a cathode ray tube (CRT), a liquid crystal display (LCD) and a loudspeaker; the storage part 508 comprising a hard disk; and a communication part 509 comprising network interface cards such as LAN cards and modulation demodulators. The communication part 509 executes communication processing through a network such as Internet. A driver 510 is also connected to the I/O interface 505 as required. A removable medium 511, such as a disk, a CD, a magneto-optical disc and a semiconductor memory, is installed on the driver 510 as required, which is convenient for installing computer programs which are read from the removable medium into the storage part 508 as required.

Particularly, according to the disclosed embodiments, the method described in any of the above embodiments can be realized as a computer software program. For example, the disclosed embodiment comprises a computer program product which comprises computer programs tangibly included on a machine readable medium. The computer programs include program codes used for executing any of the above methods. In this embodiment, the computer programs can be downloaded and installed from the network through the communication part 509, and/or installed from the removable medium 511.

In another aspect, the present application also provides a computer readable storage medium. The computer readable storage medium may be the computer readable storage medium included in the device of the above embodiment, and may be a computer readable storage medium which exists individually and is not assembled into the device. The computer readable storage medium stores one or more programs. The programs are used by one or more processors to execute the method provided in the present application.

Flow charts and block diagrams in the drawings show realizable architectures functions and operation of the system, the method and the computer program product according to various embodiments of the present invention. In this regard, each block in the flow charts or block diagrams can represent a part of a module, a program segment or codes; and the part of the module, the program segment or the codes includes one or more executable instructions for realizing specified logical functions. It should also be noted that in some alternative implementations, the functions indicated in the blocks may also occur in a sequence different from that indicated in the drawings. For example, two blocks that are indicated continuously can actually be executed essentially concurrently, and sometimes can also be executed in reverse order, depending on the involved functions. It should also be noted that each block in the block diagrams and/or flow charts and combinations of the blocks in the block diagrams and/or flow charts can be realized by a hardware-based system specially used for executing specific functions or operation or realized by combinations of special hardware and computer instructions.

Units or modules described in the embodiments of the present application can be realized by software, or realized by hardware. The described units or modules can also be arranged in the processor. For example, each of the units can be a software program which is set in a computer or mobile intelligent device, or an individually configured hardware device. The names of these units or modules do not limit the units or modules in any way.

The above illustration is only the explanation of preferred embodiments of the present application and the used technical principles. Those skilled in the art shall understand that the invention scope involved in the present application is not limited to the technical solution formed by the specific combination of the above technical features, and shall also be covered in other technical solutions formed by any combination of the above technical features or equivalent features without departing from the concept of the present application, e.g., the technical solutions formed by mutual replacement of the above features and (but not limited to) technical features with similar functions disclosed the present application.

## Claims

1. A distributed data storage method, applicable to blockchain nodes, comprising:
generating first data according to a first number of to-be-stored continuous blocks;
calculating a first distance between a node ID of a current node and first data, and respectively calculating a second distance between the node ID of each node in a contained routing table and the first data;
judging whether any second distance is less than the first distance:
if no, generating first archived data according to the first number of to-be-stored continuous blocks and storing the first archived data; and
generating a first data set according to the first data and the first archived data; and
selecting a second number of nodes from the contained routing table according to a pre-configured node selection method and transmitting the first data set for each selected node for storing the first archived data according to the first data set.

2. The method according to claim 1, wherein the step of selecting a second number of nodes from the contained routing table according to the pre-configured node selection method comprises:
selecting a second number of nodes from the contained routing table according to the second distances in an ascending order.

3. The method according to claim 1, wherein the step of generating first data according to the first number of to-be-stored continuous blocks comprises:
generating the first data according to blockhash of the first number of to-be-stored continuous blocks.

4. The method according to any one of claims 1-3, wherein a blockchain network is a kad network; the stored first archived data is configured with an expiration time; the method also comprises:
receiving a second data set transmitted by other blockchain nodes, wherein the second data set is generated by other blockchain nodes according to the second data and the first archived data, and the second data is generated by other blockchain nodes according to the stored first archived data;
updating the expiration time according to the time at which the second data set is received;
judging whether the current time is a pre-configured time:
if so, checking whether the current time exceeds the expiration time:
if so, deleting the stored first archived data;
if no, returning a second number of nodes selected from the contained routing table according to the pre-configured node selection method.

5. A distributed data storage method, applicable to blockchain nodes, comprising:
receiving a first data set transmitted by a first blockchain node, wherein the first data set comprises first data and first archived data; the first data is generated by the first blockchain node according to a first number of to-be-stored continuous blocks; the first data set is generated by the first blockchain node when judging that the first distance is not less than any second distance; the first distance is calculated according to the node id of the first blockchain node and the first data; each of the second distances is calculated according to the node ID of each node of the routing table contained in the first blockchain node and the first data; the first archived data is generated by the first blockchain node according to the first number of to-be-stored continuous blocks; the first blockchain node is also used for transmitting the first data set to a second number of nodes selected from the contained routing table according to the pre-configured node selection method;
storing the first archived data according to the first data set.

6. The method according to claim 5, wherein the step of transmitting the first data set to a second number of nodes selected from the contained routing table according to the pre-configured node selection method comprises:
transmitting the first data set to a second number of nodes selected from the contained routing table according to the second distances in an ascending order.

7. The method according to claim 5, wherein the first data is generated by the first blockchain node according to the blockhash of the first number of to-be-stored continuous blocks.

8. The method according to any one of claims 5-7, wherein a blockchain network is a kad network; the stored first archived data is configured with an expiration time; the method also comprises:
receiving a second data set transmitted by the first data set or other blockchain nodes, wherein the second data set is generated by other blockchain nodes according to the second data and second archived data, and the second data and the second data set are generated by other blockchain nodes according to the stored first archived data;
updating the expiration time according to the time at which the first data set or the second data set is received;
judging whether the current time is a pre-configured time:
if so, checking whether the current time exceeds the expiration time:
if so, deleting the stored first archived data;
if no, generating third data according to the stored first archived data, and generating a third data set according to the third data and the first archived data; and
selecting a second number of nodes from the contained routing table according to the pre-configured node selection method; and transmitting the third data set for each selected node.

9. A device, comprising:
one or more processors;
a memory, used to store one or more procedures;
wherein when the one or more procedures are executed by the one or more processors, one or more processors execute the method according to any one of claims 1-8.

10. A storage medium storing computer programs, wherein the programs, when executed by a processor, realize the method according to any one of claims 1-8.
